(19) Europäisches Patentamt / European Patent Office / Office européen des brevets

(11) **EP 2 492 868 A1**

(12) **EUROPEAN PATENT APPLICATION**
published in accordance with Art. 153(4) EPC

(43) Date of publication:
**29.08.2012 Bulletin 2012/35**

(51) Int Cl.:
**G06T 7/00** (2006.01)      **G06T 1/00** (2006.01)
**G08G 1/16** (2006.01)      **H04N 7/18** (2006.01)

(21) Application number: **10824787.5**

(22) Date of filing: **05.10.2010**

(86) International application number:
**PCT/JP2010/067400**

(87) International publication number:
**WO 2011/048938 (28.04.2011 Gazette 2011/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.10.2009 JP 2009244443**

(71) Applicant: **Clarion Co., Ltd.
Tokyo 112-8608 (JP)**

(72) Inventor: **ISHII, Katsuichi
Tokyo 112-8608 (JP)**

(74) Representative: **Louis Pöhlau Lohrentz
Patentanwälte
Postfach 30 55
90014 Nürnberg (DE)**

(54) **FAR-INFRARED PEDESTRIAN DETECTION DEVICE**

(57)    A far-infrared pedestrian detection device includes a point-at-infinity detector (30) that detects the position of a point at infinity from a captured far-infrared image (200), and a pedestrian detection region setting unit (40) that sets a pedestrian detection region in the captured far-infrared image (200) according to the detected position of the point at infinity, and the device detects a pedestrian within the pedestrian detection region.

FIG.2

EP 2 492 868 A1

**Description**

TECHNICAL FIELD

The present invention relates to a far-infrared pedestrian detection device and more particularly to an approach for improving efficiency in image processing for detecting the position of a pedestrian from a captured image.

BACKGROUND ART

Heretofore, technical measures have been taken to reduce traffic casualties. Among them, for protection of drivers that account for a large percentage of traffic deaths, air bags and the like have come into widespread use and thus achieved the marked effect of reducing the casualties. Meanwhile, for safety measures for pedestrians that, next to the drivers, account for a large percentage of the traffic deaths, studies have been made to achieve a system that detects the presence or absence of a pedestrian and the position of the pedestrian from a captured image of a view towards the front of a vehicle and notifies a driver of the result of the detection.

Specifically, the system includes a far-infrared camera mounted in the vehicle for capturing an image in a direction of travel of the vehicle, and the system detects a pedestrian from a captured image, and presents an output to the driver by superimposing a marker on a pedestrian portion of the image. Moreover, in the future, the system will enable avoiding a collision by determining automatically the degree of danger when a pedestrian is detected by the system, and giving a warning or providing braking or steering by an automatic steering device of the vehicle when a decision is made that there is a danger.

What is called template matching is used as an approach for detecting a pedestrian from an image. The template matching involves preparing a pedestrian template beforehand, and determining the degree of similarity between the template and a region in an image where a pedestrian may possibly be present, Methods for calculating the degree of similarity are broadly divided into the approach of "comparing pixel values" and the approach of "comparing contour information."

Of these, the contour information does not depend on the brightness of an image, and is therefore suitable for outdoor use, such as for use in a vehicle, in which the brightness of the image varies greatly, depending upon the weather or the position of the sun. Further, the contour information can be represented in binary or in a few gray levels, and therefore requires a small amount of data handled, resulting in a small amount of calculation of the degree of similarity involved in the template matching that accounts for a large percentage of the amount of processing in a pedestrian detection process.

Next, description will be given with regard to a processing process of a far-infrared pedestrian detection device based on contour information.

First, a process for enhancing contrast throughout the entire screen is performed thereby to make clear a difference between values (hereinafter called pixel values) stored in the respective pixels of a captured image and thereby enhance a contour of the image.

Then, a matching process is performed on the contour-enhanced image with a template prepared beforehand in which a contour of a pedestrian is enhanced, thereby to determine a correlation value between each portion of the image and the template (or a correlation map represented by the correlation value of the image with each position on the template).

Here, for the matching process with the template, a region where a pedestrian (or an image of the pedestrian) may possibly be present is cut out of the contour-enhanced image to the same size as the template. Alternatively, an image is cut out to the same size as an assumed pedestrian (or an image of the assumed pedestrian), and thereafter, the cut-out image is enlarged or reduced to the same size as the template.

The correlation values in the obtained correlation map have continuity (that is, there are no sudden changes in the correlation values, provided that positions are adjacent to each other), and therefore, a region represented by a large correlation value in the correlation map is the region having a somewhat large area, and, in the region, a portion to which the template is applied at a position having the largest correlation value is a candidate for a portion in which the image of the pedestrian may be present.

Then, the largest correlation value is compared to a preset threshold value (that is, the value suited to determine whether or not the pedestrian is present), and, when the largest correlation value exceeds the threshold value, a decision is made that the image of the pedestrian is present at the position having the largest correlation value. (Refer to Patent Document 1.)

PRIOR ART DOCUMENT

PATENT DOCUMENT

Patent Document 1: Japanese Patent Application Publication No. 2003-009140

SUMMARY OF THE INVENTION

PROBLEM TO BE SOLVED BY THE INVENTION

In the conventional example, a template matching process for detecting a pedestrian is performed throughout the entire captured image.

The template matching process has the problem of placing a high load on a computer even when utilizing contour information having a small amount of information, because of having to perform the calculation to determine a correlation between a captured image and a template, for each of pixels in the captured image, while shifting the position of the template.

The present invention has been made in consideration for the foregoing problems. An object of the present invention is to provide a far-infrared pedestrian detection device capable of reducing the load on the computer involved in a pedestrian detection process.

MEANS FOR SOLVING THE PROBLEM

A far-infrared pedestrian detection device according to the present invention detects the position of a point at infinity from a captured image and sets a pedestrian detection region based on the position of the point at infinity, and, thereafter, performs pedestrian detection only on the pedestrian detection region, thereby reducing a load on computer processing.

Specifically, a far-infrared pedestrian detection device according to the present invention for detecting the position of a pedestrian from an image captured by a far-infrared image capture unit having sensitivity to far infrared rays is characterized in that the device includes: a point-at-infinity detector that determines the position of a point at infinity in the image, based on the captured image; and a pedestrian detection region setting unit that sets a detection region for detection of the position of the pedestrian, according to the position of the point at infinity.

According to the far-infrared pedestrian detection device thus configured according to the present invention, the point-at-infinity detector detects the position of the point at infinity in the image captured by the image capture unit, and the pedestrian detection region setting unit limits the pedestrian detection region in the captured image according to the detected position of the point at infinity. Thus, when a template matching process, for example, is performed as computer processing means for pedestrian detection, a load on the computer required for the template matching process can be reduced.

In addition, the far-infrared pedestrian detection device according to the present invention is desirably configured such that the point-at-infinity detector includes: a contour detector that detects, in the image, contour constituent points at each of which a difference in pixel value between adjacent pixels is equal to or more than a predetermined value, and directions in which contours extend at the contour constituent points; a specific contour component removal unit that removes a contour constituent point at which the contour extends in a horizontal or nearly horizontal direction, and a contour constituent point at which the contour extends in a vertical or nearly vertical direction, from the contour constituent points detected by the contour detector; and a straight line detector that detects two straight lines on which the contour extends in directions that are a predetermined value or more away from each other, based on the positions of the contour constituent points that are not removed by the specific contour component removal unit and on the directions in which the contours extend at the contour constituent points, and the point-at-infinity detector determines the position of the point at infinity, based on the detected two straight lines.

According to the far-infrared pedestrian detection device thus configured according to the present invention, the specific contour component removal unit removes in advance the contour constituent point at which the contour extends in the horizontal or nearly horizontal direction, and the contour constituent point at which the contour extends in the vertical or nearly vertical direction, which may be unavailable for use as information for determination of the position of the point at infinity in the image, from the contour constituent points detected by the contour detector. Thus, the position of the point at infinity can be accurately detected.

Moreover, the far-infrared pedestrian detection device according to the present invention is desirably configured such that the specific contour component removal unit removes information corresponding to a horizontal or nearly horizontal straight line and a vertical or nearly vertical straight line passing through the contour constituent points, from Hough space created by performing a Hough transform on the contour constituent points detected by the contour detector, and the straight line detector detects the straight lines based on results obtained by removing the specific contour components.

According to the far-infrared pedestrian detection device thus configured according to the present invention, straight line detection can be accomplished by applying the Hough transform to the contour constituent points detected by the contour detector, and thereafter, removing all horizontal or nearly horizontal contour components or vertical or nearly vertical contour components in a parameter space (i.e. the Hough space) created by the Hough transform, and further, detecting a local maximum corresponding to the two straight lines that are a predetermined angle or more away from each other, in the Hough space, based on the results obtained by removing the specific contour components. Thus, detection of the two straight lines required for determination of the position of the point at infinity can be accomplished by a simple procedure.

Further, the far-infrared pedestrian detection device according to the present invention is desirably configured such that a template matching unit, a marker superimposition unit, and an image display unit are mounted on a vehicle, the template matching unit performing comparison and matching with a predetermined template on the specified pedestrian detection region thereby to detect an image portion corresponding to an image represented on the template, the marker superimposition unit presenting an output with a predetermined marker superimposed on the image portion detected by the template matching unit, the image display unit displaying predetermined information, the image obtained by image capture is an image obtained by capturing an image of a predetermined region in a direction of travel of the vehicle, and the template matching unit performs matching with a template to which an image of a pedestrian is applied as the image of the template.

According to the far-infrared pedestrian detection device thus configured according to the present invention, the pedestrian detection region is specified for the captured image, and thereafter, the template matching unit performs the comparison and matching (i.e. template matching) with the template on which the image of the pedestrian is represented, and thus, it is not required that the template matching be performed throughout the entire captured image. Therefore, the predetermined marker can be accurately superimposed on the pedestrian image portion of the captured far-infrared image, and thus, attention of a person who rides in the vehicle, such as a driver, can be called to the pedestrian.

EFFECT OF THE INVENTION

According to the far-infrared pedestrian detection device according to the present invention, the effect of being able to reduce the load on the computer involved in image processing performed for pedestrian detection can be achieved.

BRIEF DESCRIPTION OF THE DRAWINGS

[FIG. 1] FIG. 1 is a block diagram showing in outline a configuration of a far-infrared pedestrian detection device 100 according to an embodiment of the present invention.

[FIG. 2] FIG. 2 is a block diagram showing in detail a configuration of a pedestrian detector 20 in the far-infrared pedestrian detection device 100 of FIG. 1.

[FIG. 3] FIG. 3 is a flowchart showing a procedure for detecting a point at infinity performed by a point-at-infinity detector 30, a procedure for setting a pedestrian detection region performed by a pedestrian detection region setting unit 40, and a procedure for a process for detecting an image of a pedestrian performed by a template matching unit 50, in the pedestrian detector 20 shown in FIG. 2.

[FIG. 4] FIG. 4 shows an example of a far-infrared image 200 captured by a far-infrared image capture unit 10.

[FIG. 5] FIG. 5 shows a contour-enhanced image 201 obtained by performing contour enhancement on the far-infrared image 200.

[FIG. 6] FIG. 6 shows a contour constituent point image 202 obtained by extracting points that constitute a contour from the contour-enhanced image 201.

[FIG. 7] FIG. 7 is a representation of assistance in explaining $\theta$ and $\rho$ calculated by a Hough transform.

[FIG. 8] FIG. 8 shows a Hough transformed image 203 obtained by performing a Hough transform on the contour constituent point image 202.

[FIG. 9] FIG. 9 shows a specific-contour-component-removed image 204 obtained by removing contour components of contours extending in a horizontal or nearly vertical direction from the Hough transformed image 203.

[FIG. 10] FIG. 10 shows detected results of two straight lines whose directions are a predetermined value or more away from each other, obtained from the specific-contour-component-removed image 204.

[FIG. 11] FIG. 11 is an illustration showing the relative positions of a pedestrian K3, a lens K1 that forms the far-infrared image capture unit 10, and an image pickup device K2 that forms the far-infrared image capture unit 10.
[FIG. 12] FIG. 12 is a representation showing a pedestrian detection region A1 when the far-infrared image capture unit 10 is in the relative position shown in FIG. 11.
[FIG. 13] FIG. 13 is an illustration showing the relative positions of the pedestrian K3, the lens K1, and the image pickup device K2, when an optical axis of an optical system of the far-infrared image capture unit 10 is inclined φ in a downward direction.
[FIG. 14] FIG. 14 is a representation showing a pedestrian detection region A2 when the optical axis of the optical system of the far-infrared image capture unit 10 is inclined 5° in the downward direction.
[FIG. 15] FIG. 15 is a representation showing a pedestrian detection region A3 when the optical axis of the optical system of the far-infrared image capture unit 10 is inclined 5° in an upward direction.
[FIG. 16] FIG. 16 shows a result obtained by superimposing a rectangular frame F indicating the detected position of a pedestrian on a far-infrared image 205.

MODES FOR CARRYING OUT THE INVENTION

Embodiments of a far-infrared pedestrian detection device according to the present invention will be described below with reference to the drawings.

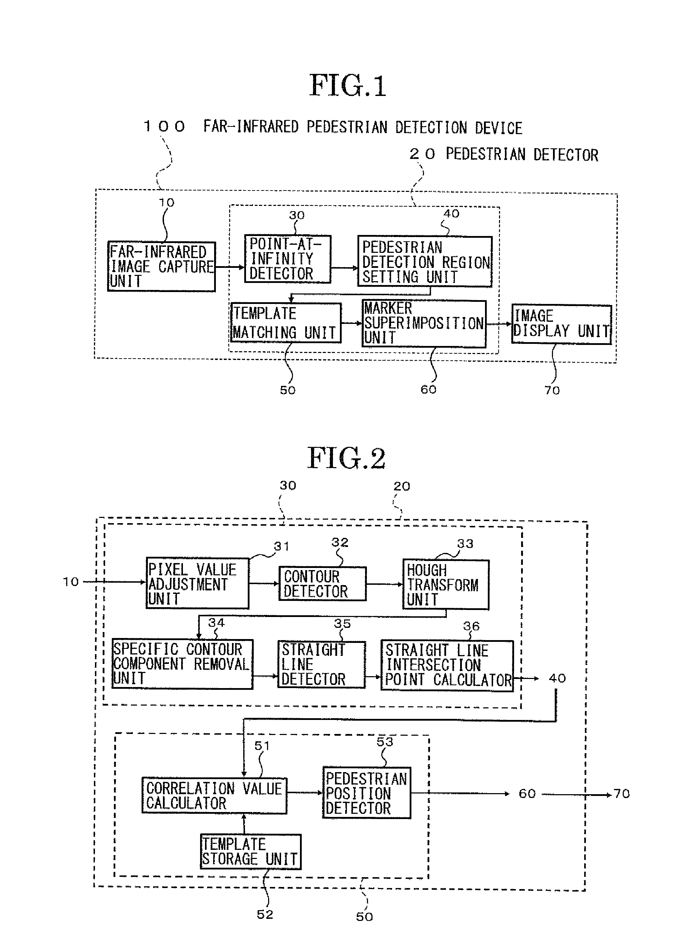

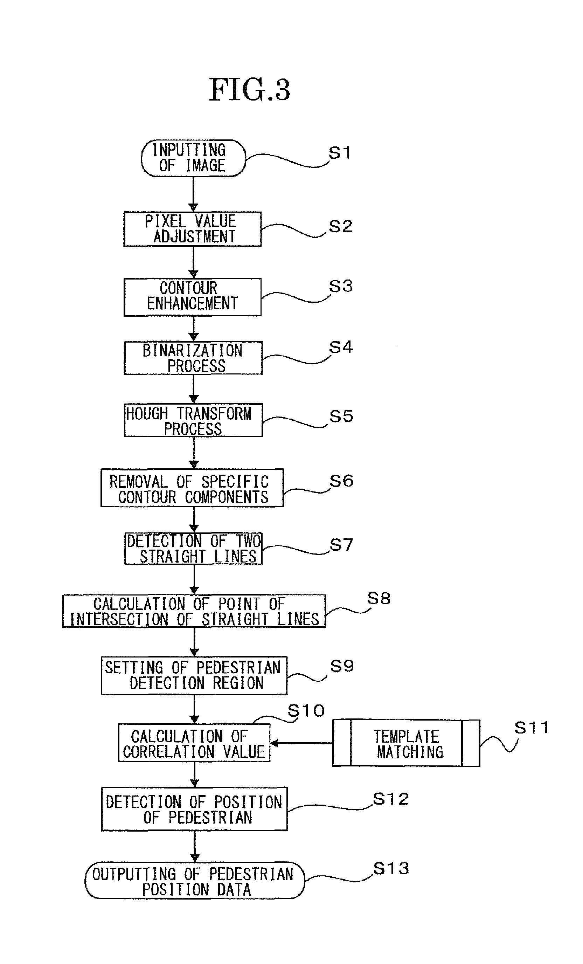

FIG. 1 is a block diagram showing in outline a configuration of a far-infrared pedestrian detection device 100 according to an embodiment of the present invention. FIG. 2 is a block diagram showing in detail a configuration of a pedestrian detector 20 in the far-infrared pedestrian detection device 100 of FIG. 1. FIG. 3 is a flowchart showing a process for detecting an image of a pedestrian, performed by a point-at-infinity detector 30, a pedestrian detection region setting unit 40 and a template matching unit 50 in the pedestrian detector 20 shown in FIG. 2.

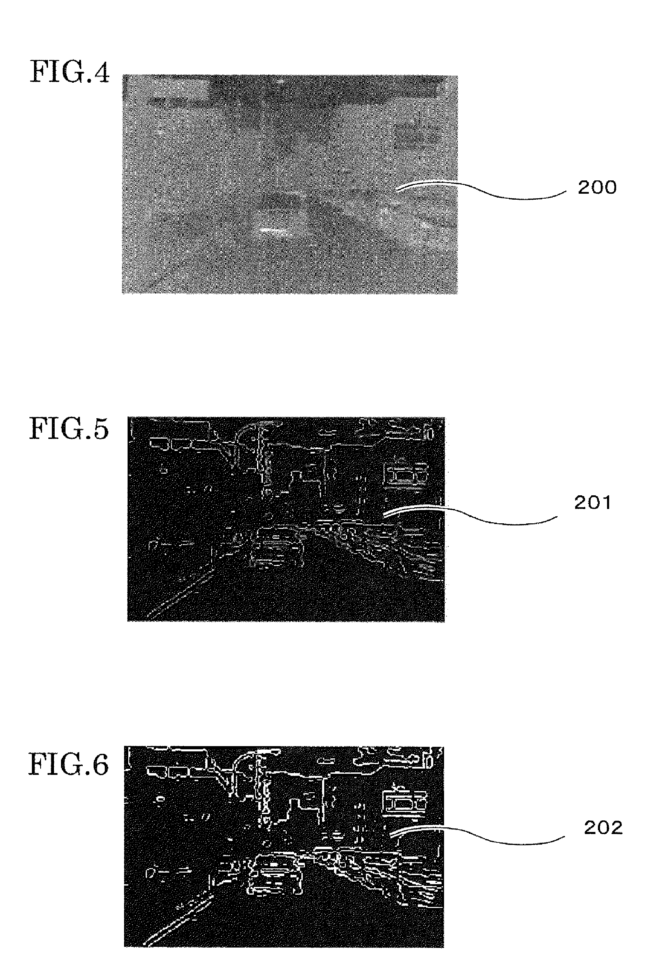

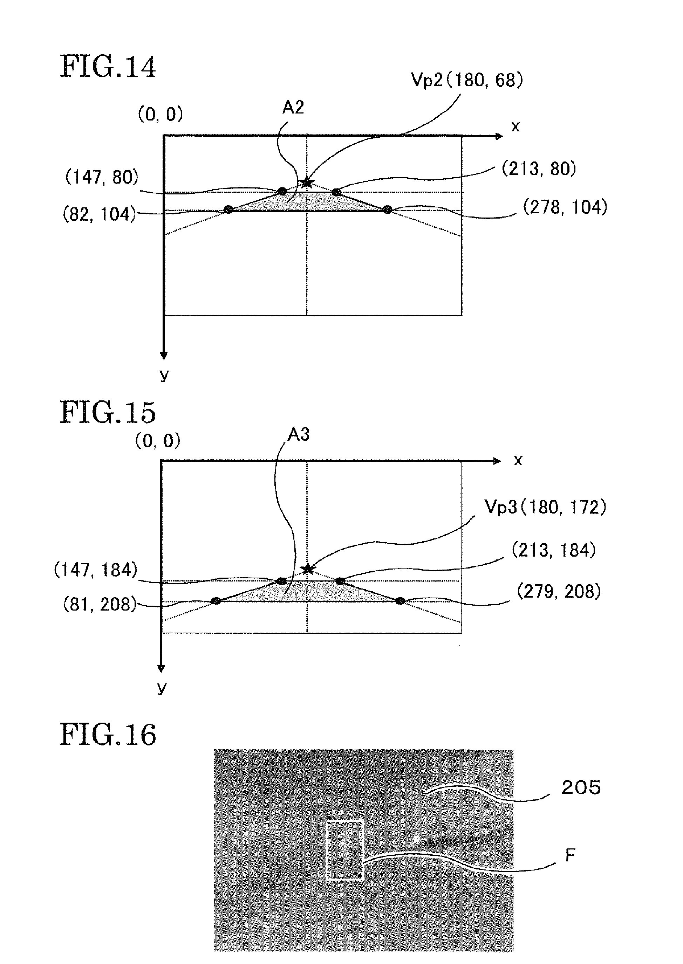

As shown in FIG. 1, the far-infrared pedestrian detection device 100 according to the present invention includes a far-infrared image capture unit 10 mounted in a vehicle for capturing a far-infrared image 200 (see FIG. 4) of a predetermined region in a direction of travel of the vehicle; the pedestrian detector 20 that detects an image representing a pedestrian from the far-infrared image 200, based on the far-infrared image 200 captured by the far-infrared image capture unit 10, and presents an output with a rectangular frame (or a marker) superimposed on a portion of the detected image of the pedestrian; and an image display unit 70 that displays a far-infrared image 205 marked with a rectangular frame F (see FIG. 16) at the position of the image of the pedestrian.

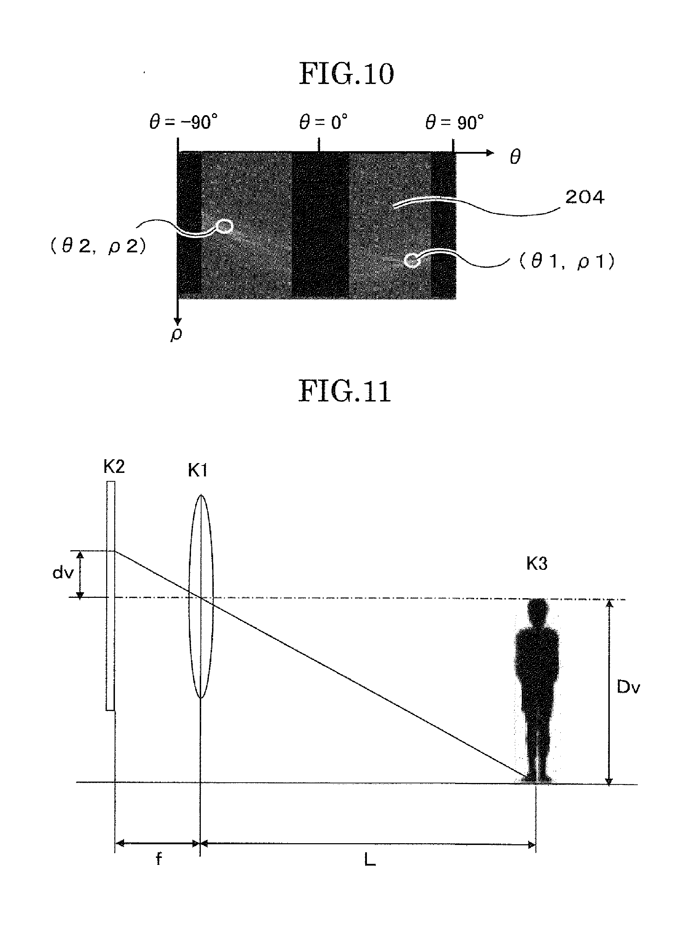

Here, as shown in FIG. 11, the far-infrared image capture unit 10 contains therein an optical system (i.e. a lens K1) and an image pickup device K2 to convert a picture of the outside world into an electric signal.

Further, as shown in FIG. 1, the pedestrian detector 20 includes the point-at-infinity detector 30, the pedestrian detection region setting unit 40, the template matching unit 50, and a marker superimposition unit 60.

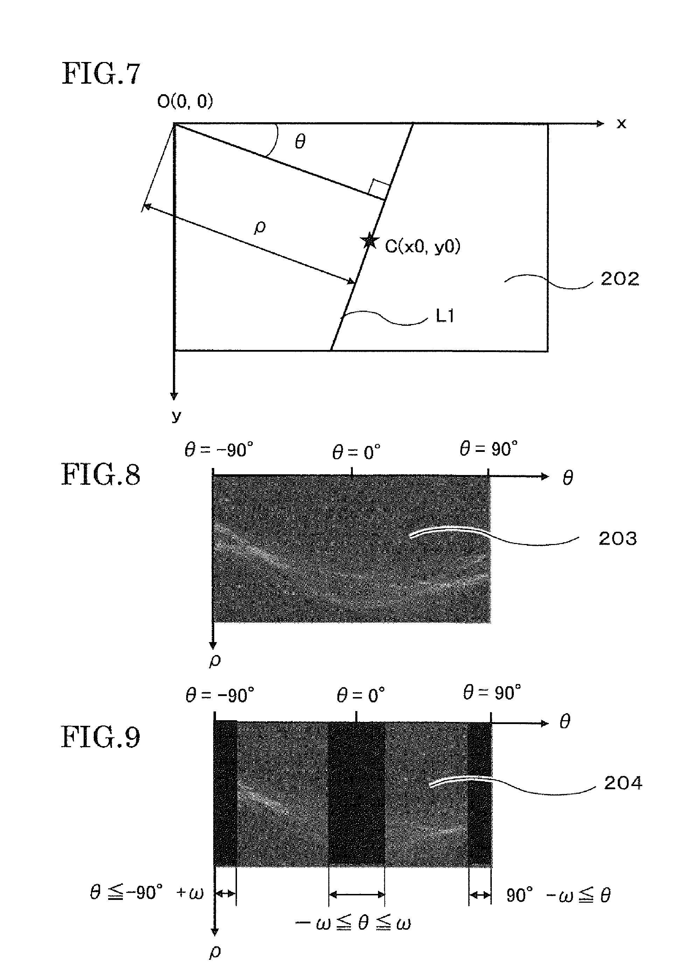

Then, the point-at-infinity detector 30 includes a pixel value adjustment unit 31 that enhances contrast of the far-infrared image 200; a contour detector 32 that generates a contour-enhanced image 201 (see FIG. 5) by enhancing a contour of the contrast-enhanced image obtained by the pixel value adjustment unit 31 and, further, generates a contour constituent point image 202 (see FIG. 6) by extracting pixels, as contour constituent points, having contour intensity equal to or more than a predetermined value; a Hough transform unit 33 that performs a Hough transform on the contour constituent point image 202 generated by the contour detector 32; a specific contour component removal unit 34 that removes contour components in a specific direction from a Hough transformed image 203 (see FIG. 8) obtained as a result of the Hough transform; a straight line detector 35 that detects two straight lines whose directions are a predetermined value or more away from each other, from a specific-contour-component-removed image 204 (see FIG. 9) obtained by the specific contour component removal unit 34 removing the contour components in the specific direction; and a straight line intersection point calculator 36 that determines a point of intersection of the two straight lines detected by the straight line detector 35.

Here, the Hough transform performed by the Hough transform unit 33 is widely used as an image processing approach for detecting straight line components from a given image. As described specifically, first, for a contour constituent point (x, y) in an image, an arbitrary straight line passing through the point is assumed. At this time, a relationship between ρ and θ is established by Equation (1):

$$\rho = x \cdot \cos\theta + y \cdot \sin\theta \qquad (1)$$

where ρ denotes the length of a perpendicular line drawn from an origin point of the image to the straight line, and θ denotes an angle formed by ρ and a horizontal axis of the image.
Here, for all contour constituent points in the given image, (θ, ρ) space called Hough space is created according to a rule that, while the value of θ is changed by a predetermined value, ρ is calculated by Equation (1) each time the value of θ is changed, and a pixel value corresponding to a calculated result (θ, ρ) is incremented by 1. The approach is that, when as a result of this process straight line components are contained in the given image, outstanding values are stored in pixels corresponding to the straight line components (θ, ρ), and thus, (θ, ρ) that gives a local maximum of the stored value is determined from the Hough space, whereby the straight line components in the given image are detected.

The pedestrian detection region setting unit 40 sets a region where a pedestrian is assumed to be present, based on the position of a point at infinity in the far-infrared image 200, detected by the point-at-infinity detector 30.

In addition, the template matching unit 50 includes a correlation value calculator 51 that performs a process for template matching between the contour-enhanced image 201 and a pedestrian template stored in a template storage unit 52, on the region set by the pedestrian detection region setting unit 40, thereby to determine a correlation value between the contour-enhanced image 201 and the pedestrian template, and a pedestrian position detector 53 that detects the position of a pedestrian, based on the correlation value calculated by the correlation value calculator 51.

The marker superimposition unit 60 presents an output with the rectangular frame F shown in FIG. 16 superimposed on the position of the image of the pedestrian obtained by the template matching unit 50, in the far-infrared image 200 obtained by the far-infrared image capture unit 10.

Next, operation of the far-infrared pedestrian detection device 100 according to the embodiment will be described with reference to the flowchart of FIG. 3.

First, the far-infrared image capture unit 10 mounted in the vehicle captures an image of the predetermined region in the direction of travel of the vehicle thereby to capture a far-infrared image such for example as the far-infrared image 200 shown in FIG. 4 or the far-infrared image 205 shown in FIG. 16. In the far-infrared image thus captured, a large value is stored in a target portion, such as a human body, which radiates heat, and thus, the portion is brightly observed on the image, for example as is the case with the far-infrared image 205 shown in FIG. 16.

Operation of the present invention will be described hereinafter giving the far-infrared image 200 by way of example.

At step 1 (S1) of FIG. 3, the far-infrared image 200 captured by the far-infrared image capture unit 10 is inputted to the pixel value adjustment unit 31. The pixel value adjustment unit 31 performs a process for enhancing the contrast of the input far-infrared image 200 in order to achieve more effective contour enhancement to be performed later (at S2 of FIG. 3).

Executed as the process for enhancing the contrast is, for example, a process that involves determining maximum and minimum values of pixel values in the far-infrared image 200, and performing linear interpolation of an intermediate value by converting the maximum value to 255 and the minimum value to 0 when the pixel values are quantized to 8 bits, or a process that involves determining a histogram of pixel values, and, with reference to its median, performing nonlinear transformation of pixel values, between 0 and the median, on pixels having pixel values smaller than the median, and also, between the median and 255, on pixels having pixel values larger than the median. Of course, the process for contrast enhancement is not limited to the above-described specific methods, and any process having the effect comparable to the above may be performed.

The contrast-enhanced image obtained by the pixel value adjustment unit 31 is inputted to the contour detector 32. The contour detector 32 performs a differentiation process on the input contrast-enhanced image (at S3 of FIG. 3). The differentiation process obtains the contour-enhanced image 201 (see FIG. 5) having an object's contour enhanced, in which there are sharp changes in pixel values.

The differentiation process of the image can be executed for example by performing a filtering process called spatial filtering, using various proposed operators such as a Sobel operator and a Prewitt operator. This process is an approach generally used in digital image processing, and therefore, detailed description thereof will be omitted. Here, any of these operators may be used for the process.

Then, the contour detector 32 extracts contour constituent points having high contour intensity, in which there is a large difference in pixel value between adjacent pixels, from the contour-enhanced image 201. Here, a binarization process that involves storing "1" in pixels in the contour-enhanced image 201 having pixel values equal to or more than a predetermined value, and storing "0" in the other pixels is performed (at S4 of FIG. 3). The binarization process obtains the contour constituent point image 202 (see FIG. 6). In FIG. 6, "1" indicating the contour constituent points is stored in each of white pixels, and "0" indicating anything other than the contour constituent points is stored in each of black pixels.

The contour constituent point image 202 is inputted to the Hough transform unit 33. The Hough transform unit 33 obtains the Hough transformed image 203 (see FIG. 8) by performing a Hough transform on the contour constituent point image 202 (at S5 of FIG. 3).

A procedure for a Hough transform process here performed will be described with reference to FIG. 7.

For all pixels in the contour constituent point image 202 in which "1" are stored, straight lines that may possibly pass through the pixels are assumed, and the length ρ of a perpendicular line drawn from an origin point O (0, 0) at the upper left of the contour constituent point image 202 to each of the assumed straight lines, and the angle θ formed by a horizontal axis of the contour constituent point image 202 and the perpendicular line are calculated.

In FIG. 7, from the origin point O (0, 0), a point C (x0, y0) is disclosed as a representative of the contour constituent points, and a straight line L1 is disclosed as a representative of all straight lines passing through the point C.

By Equation (1), combinations of $(\theta, \rho)$ are determined by calculating $\rho$ corresponding to $\theta$ each time $\theta$ is changed, while changing $\theta$ by a predetermined value (for example, 1°), and pixel values of coordinates corresponding to $(\theta, \rho)$ are incremented by 1, and thereby, the Hough transformed image 203 called the Hough space is created.

The generated Hough transformed image 203 is inputted to the specific contour component removal unit 34, and is subjected to a process for removing contours extending in horizontal and vertical directions (at S6 of FIG. 3).

Here, for detection of a point at infinity from a captured image of a view towards the front of the vehicle in the direction of travel thereof, the point at infinity is generally obtained by determining a point of intersection of plural straight lines converging to the point at infinity, since the captured image has undergone perspective transformation. However, there are many contours that are unavailable for use as information for determination of the position of the point at infinity, such as contours of obstacles on the road and contours of buildings outside the road. Contours (i.e. horizontal contours) extending in the horizontal direction and contours (i.e. vertical contours) extending in the vertical direction in the perspective transformed image, in particular, are often unnecessary for the determination of the position of the point at infinity. The specific contour component removal unit 34 performs the process for removing such horizontal contours and vertical contours, prior to the detection of the point at infinity.

Specifically, the following transformation process is performed on the Hough transformed image 203, using a preset threshold value $\omega$. Here, the Hough transformed image 203 is represented as $M(\theta, \rho)$, and an image obtained as a result of the process for removing specific contour components is represented as $N(\theta, \rho)$ (hereinafter called the specific-contour-component-removed image 204).

$$N(\theta, \rho) = 0 \ (\text{where} -\omega \leq \theta \leq \omega, \ 90°-\omega \leq \theta, \ \theta \leq -90°+\omega) \tag{2}$$

$$N(\theta, \rho) = M(\theta, \rho) \ (\text{for } \theta \text{ other than that of Equation (2))} \tag{3}$$

Here, $\omega$ is the predetermined threshold value indicating that it is close to the horizontal and vertical contours, and $\omega$ may be set equal to 5° ($\omega = 5°$), for example. An example of the specific-contour-component-removed image 204 thus generated is shown in FIG. 9. Incidentally, the process represented by Equations (2) and (3) can be achieved specifically by subjecting the Hough transformed image 203 to the simple process of substituting 0 for all pixel values in a range represented by Equation (2).

Then, the straight line detector 35 detects two straight lines from the specific-contour-component-removed image 204 (at S7 of FIG. 3). This straight line detection process is performed by determining two local maximum points having $\theta$ a predetermined value or more apart, in the specific-contour-component-removed image 204.

First, a pixel in the specific-contour-component-removed image 204 in which a maximum value is stored is determined. The determined pixel is represented as $(\theta 1, \rho 1)$. Then, a pixel of the specific-contour-component-removed image 204 in which a maximum value is stored is determined for $\theta$ in a range such that $\theta < \theta 1-\delta$ and $\theta 1+\delta < \theta$, relative to a predetermined value $\delta$, which is preset equal to 90° ($\delta = 90°$), for example. The determined pixel is represented as $(\theta 2, \rho 2)$.

The $(\theta 1, \rho 1)$ and $(\theta 2, \rho 2)$ thus determined represent two straight lines present in the far-infrared image 200, having the largest number of contour constituent points and the second largest number of contour constituent points, respectively. Here, the threshold value $\delta$ is provided because the use of two straight lines whose directions are different insofar as possible enables more accurate detection of the point at infinity. An example of detected results of $(\theta 1, \rho 1)$ and $(\theta 2, \rho 2)$ is shown in FIG. 10.

Then, the straight line intersection point calculator 36 calculates a point of intersection of the two straight lines $(\theta 1, \rho 1)$ and $(\theta 2, \rho 2)$ (at S8 of FIG. 3). Specifically, the point of intersection is determined by determining equations of the two straight lines determined by $(\theta 1, \rho 1)$ and $(\theta 2, \rho 2)$, and solving the equations of the two straight lines as simultaneous equations. The point of intersection thus calculated represents the position of the point at infinity in the far-infrared image 200.

Then, the pedestrian detection region setting unit 40 sets a region where a pedestrian is assumed to be present, based on the calculated position of the point at infinity (at S9 of FIG. 3).

Here, description will be given with regard to a method for setting a pedestrian detection region, using specific numeric values. It is assumed here that the number of pixels of the image pickup device of the far-infrared image capture unit 10 is 360 pixels by 240 pixels, the size of each pixel of the image pickup device is 42 $\mu$m (its length and width dimensions are the same), and a focal length f of the lens K1 that forms the far-infrared image capture unit 10 is 25 mm (f = 25 mm). In addition, it is assumed that the far-infrared image capture unit 10 is placed at a depression angle of 0° at a height h of 180 cm of the vehicle (h = 180 cm), facing in the direction of travel of the vehicle.

Although a range of pedestrian detection may be set based on design requirements for a pedestrian detection system, it is assumed here that a pedestrian present in a range such that a distance L to the pedestrian lies between 30 and 90 m and in a range such that widths W to the left and right sides of the vehicle are each 5 m is detected.

In a layout shown in FIG. 11, the position dv of the pedestrian at his or her feet in the vertical direction, projected on the image pickup device, is determined by Equation (4) from the distance L to the pedestrian, the focal length f of the lens that forms the far-infrared image capture unit 10, and a height Dv of the pedestrian.

$$dv = Dv \cdot f/L \qquad (4)$$

Here, in FIG. 11, K1 denotes the lens that forms the far-infrared image capture unit 10; K2, the image pickup device that forms the far-infrared image capture unit 10; and K3, the pedestrian.

When a pedestrian having a height Dv of 1.8 m (Dv = 1.8 m) is present at a distance L of 30 m (L = 30 m) towards the front of the vehicle, dv obtained from Equation (4) is 1.5 mm (dv = 1.5 mm). When dv is divided by a size of 42 μm of the image pickup device, a distance in the vertical direction from the center of a screen to the pedestrian at his or her feet is 36 pixels. Likewise, when a pedestrian is present at a distance L of 90 m (L = 90 m) towards the front of the vehicle, the distance in the vertical direction from the center of the screen to the pedestrian at his or her feet is 12 pixels.

Meanwhile, although omitted from the drawings, in the same manner as shown in FIG. 11, the position dh of the pedestrian at his or her feet in the horizontal direction, projected on the image pickup device of the far-infrared image capture unit 10, is determined by Equation (5) from the distance L to the pedestrian, the focal length f of the lens that forms the far-infrared image capture unit 10, and a distance Dh in the horizontal direction from an optical axis of the optical system of the far-infrared image capture unit 10 to the pedestrian.

$$dh = Dh \cdot f/[(Dh^2 + L^2)^{1/2} \cdot \cos\{\tan^{-1}(Dv/L)\}] \qquad (5)$$

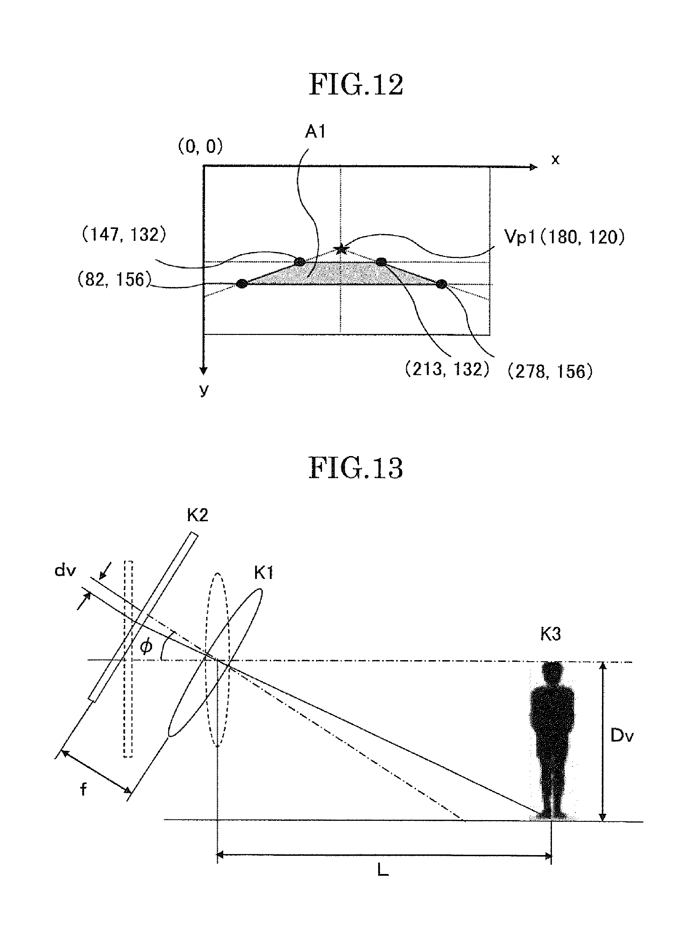

Here, when a pedestrian is present at a distance L of 30 m (L = 30 m) towards the front of the vehicle ant at a distance Dh of 5 m (Dh = 5 m) to the left side of the vehicle, dh is 4.17 mm (dh = 4.17 mm). When dh is divided by a size of 42 μm of the image pickup device, the amount of leftward deviation of the pedetrian at his or her feet from the center of the screen is 99 pixels. Likewise, when a pedestrian is present at a distance L of 90 m (L = 90 m) towards the front of the vehicle and at a distance Dh of 5 m (Dh = 5 m) to the left side of the vehicle, the amount of leftward deviation of the pedestrian at his or her feet from the center of the screen is 34 pixels. When the screen is 30 pixels. When a pedestrian is present at a distance Dh of 5 m (Dh = 5 m) to the ruight side of the vehicle, the destrian is observed at a position in symmetric relation to the above, and therefore, a pedestrian detection region where the destrian's feet may be present is a range A1 shown in FIG. 12.

In addition, in the case of conditions previously described, the position of the point at infinity in the far-infrared image 200 is Vp1 (180, 120).

Here, when the far-infrared image capture unit 10 is actually mounted in the vehicle, or when the vehicle is running with the far-infrared image capture unit 10 mounted therein, two factors cause a change in a relationship between the mounted orientation of the far-infrared image capture unit 10 and the surface of a road along which the vehicle is running. One of the factors is an error of mounting of a camera in itself, and the other is up-and-down movements of the running vehicle.

For example, it is assumed that the depression angle of the optical axis of the optical system of the far-infrared image capture unit 10 is 5° in a downward direction, not 0°, due to the error of mounting of the far-infrared image capture unit 10 or the up-and-down movements of the running vehicle. At this time, a pedestrian detection region where the pedestrian's feet may be present is calculated in the following manner.

FIG. 13 shows an imaging model in which the optical axis of the optical system of the far-infrared image capture unit 10 is inclined φ in the downward direction with respect to the horizontal direction, facing in the direction of travel of the vehicle. For sake of simplicity of explanation, it is assumed that the center of rotation coincides with the center of the lens, and the optical axis of the optical system is inclined only in an upward or downward direction. In the former case, the center of rotation, even if somewhat misaligned, does not affect results much. In the latter case, the same model may be applied to inclination in the other direction (that is, to the left or the right). Incidentally, in FIG. 13, K1 denotes the lens that forms the far-infrared image capture unit 10; K2, the image pickup device that forms the far-infrared image pickup device. K3, the pedestrian. In addition, dv denotes the position of the pedestrian at his or her feet in the vertical direction, projected on the image pickup device.

In the case of the layout of FIG. 11, the position of the point at infinity in the far-infrared image 200 is Vp2 (180, 68). In addition, in a layout of FIG. 13, dv is determined by Equation (6) from the distance L to the pedestrian, the focal length f of the lens that forms the far-infrared image capture unit 10, and the height Dv of the pedestrian.

$$dv = f \cdot \tan\{\varphi - \tan^{-1}(Dv/L)\} \qquad (6)$$

In addition, although omitted from the drawings, the position dh of the pedestrian at his or her feet in the horizontal direction, projected on the image pickup device, is determined by Equation (7) from the distance L to the pedestrian, the focal length f of the lens that forms the far-infrared image capture unit 10, and the distance Dh in the horizontal direction from the optical axis of the optical system of the far-infrared image capture unit 10 to the pedestrian at his or her feet.

$$dh = Dh \cdot f/[(Dh^2 + L^2)^{1/2} \cdot \cos\{\varphi - \tan^{-1}(Dv/L)\}] \qquad (7)$$

From Equations (6) and (7), a pedestrian detection region A2 present in the range of 30 to 90 m towards the front of the vehicle in the direction of travel thereof and 5 m to the left and right sides of the vehicle is the region shown in FIG. 14.

Further, when the optical axis of the optical system of the far-infrared image capture unit 10 is inclined 5° in the upward direction, the position of the point at infinity is Vp3 (180, 172), and a pedestrian detection region present in the range of 30 to 90 m towards the front of the vehicle in the direction of travel thereof and 5 m to the left and right sides of the vehicle is a region A3 shown in FIG. 15.

As described above, the positions of pedestrian detection regions where the pedestrian's feet may be present are in a one-to-one correspondence with the positions of the points at infinity in the far-infrared image 200, and thus, the pedestrian detection region can be determined by determining the position of the point at infinity.

The optical axis of the optical system of the far-infrared image capture unit 10 varies not only in a direction of the depression angle but also in the horizontal direction. In this case as well, the pedestrian detection region can be estimated in the same manner as a procedure previously described.

Position information on pedestrian detection regions estimated based on the positions of points at infinity in the captured far-infrared image 200 is stored in advance in the pedestrian detection region setting unit 40, and position information on a pedestrian detection region corresponding to detected coordinates of the position of a point at infinity is read out based on the coordinates of the position of the point at infinity detected by the point-at-infinity detector 30.

Then, the template matching unit 50 performs template matching for each of pixels within the pedestrian detection region set by the above-described procedure, thereby to determine the presence or absence of a pedestrian and the position of the pedestrian.

For the template matching process, an image obtained by detecting a contour of a pedestrian from a captured far-infrared image of the pedestrian is utilized as a template. The template is stored in advance in the template storage unit 52.

The template matching process is performed by applying the template stored in the template storage unit 52 for each of pixels within the pedestrian detection region, and calculating a correlation value by the correlation value calculator 51 each time the template is applied (at S10 and S11 of FIG. 3). Although there are various methods for determining a correlation value, for example, a normalized cross-correlation value between each of pixels within the template and a corresponding pixel of the contour-enhanced image 201 to which the template is applied may be determined, or the sum of values of differences in corresponding pixel value between the pixels within the template and corresponding pixels of the far-infrared image 200 may be determined.

In the former case, that is, in the case of the normalized cross-correlation value, when the template is applied to the position of a pedestrian, a maximum value of the correlation value is calculated. In the latter case, that is, in the case of calculation of the sum of the values of differences in pixel value, when the template is applied to the position of a pedestrian, a minimum value of the correlation value is calculated.

Then, the pedestrian position detector 53 detects the presence or absence of a pedestrian, and the position of the pedestrian when the pedestrian is present, based on a result calculated by the correlation value calculator 51 (at S12 of FIG. 3). This process is performed in the following manner.

By comparing the result calculated by the correlation value calculator 51 with a predetermined threshold value, a decision is made as to whether or not a pixel having a value larger or smaller than the threshold value is present.

When the normalized cross-correlation value is used as the correlation value, a decision can be made as to whether or not a larger value than the threshold value is present. When a pixel having a correlation value larger than the threshold value is found, a decision is made that a pedestrian is present at the position of the pixel, whereas when a pixel having a correlation value larger than the threshold value is not found, a decision is made that a pedestrian is absent.

Meanwhile, when the sum of the values of differences in pixel value is used as the correlation value, a decision can be made as to whether or not a smaller value than the threshold value is present. When a pixel having a correlation value smaller than the threshold value is found, a decision is made that a pedestrian is present at the position of the pixel, whereas when a pixel having a correlation value smaller than the threshold value is not found, a decision is made that a pedestrian is absent. The numerical value of the threshold value and a criterion of judgment may be set according to what is used as the correlation value.

The position of the pedestrian detected by the correlation value calculator 51 is fed to the marker superimposition unit 60, and the marker superimposition unit 60 sets the rectangular frame F that surrounds a minimum of the region of the image of the pedestrian, based on the position of the image of the pedestrian, and superimposes the rectangular frame F on the position of the pedestrian in the input far-infrared image 200 from the far-infrared image capture unit 10 and outputs the image to the image display unit 70.

The image display unit 70 displays the image marked with the rectangular frame F on the image of the pedestrian of the far-infrared image 200, fed from the marker superimposition unit 60 (at S13 of FIG. 3). FIG. 16 shows an example of the far-infrared image 205 thus generated.

Incidentally, the straight line detector 35 detects two straight lines from the specific-contour-component-removed image 204 under the condition that the directions of the two straight lines be the predetermined value δ or more away from each other, and the predetermined value δ is described as being set equal to 90° (δ = 90°) as a specific example; however, the value of δ is not limited to 90°.

Finding a point of intersection of two straight lines whose directions are as far away from each other as possible enables more accurate detection of a point at infinity, and therefore, it is desirable that a straight line representing the left side edge of a road and a straight line representing the right side edge of the road be detected. For example, when the far-infrared image capture unit 10 is arranged in the layout of FIG. 11, the left and right side edges of a road of 10 m wide intersect each other at an angle of about 140° at the point at infinity Vp1. In such a case, therefore, δ may be set to a value not exceeding 140°.

According to the far-infrared pedestrian detection device 100 thus configured according to the embodiment, the device includes a point-at-infinity detector that determines the position of a point at infinity in an image captured by the far-infrared image capture unit 10 having sensitivity to far infrared rays, and a pedestrian detection region setting unit for detection of the position of a pedestrian, according to the position of the point at infinity. Thereby, the pedestrian detection region in the captured image can be limited.

This enables reducing a load on a computer involved in the template matching process performed for pedestrian detection.

Incidentally, in the far-infrared pedestrian detection device according to the embodiment, the pedestrian detection region is limited to a preset predetermined range; however, the far-infrared pedestrian detection device according to the present invention is not limited to this embodiment but may adopt a configuration for example such that the position or size of the pedestrian detection region is changed according to speed at which the vehicle is running, acquired by a sensor installed in the vehicle, or according to the width of a road along which the vehicle is currently running, acquired by a navigation system installed in the vehicle.

Even with such above-described configuration in which the size of the pedestrian detection region is dynamically changed and the position of the pedestrian detection region is determined based on the position of a point at infinity in a far-infrared image, the same advantageous effects as those of the above-described embodiment can be achieved.

CROSS-REFERENCE TO RELATED APPLICATION

This application is based upon and claims the benefit of priority from the prior Japanese Patent Application No. 2009-244443, filed with the Japan Patent Office on October 23, 2009, the entire contents of which are incorporated herein by reference.

**Claims**

1. A far-infrared pedestrian detection device for detecting the position of a pedestrian from an image captured by a far-infrared image capture unit having sensitivity to far infrared rays, **characterized in that** the device comprises:

   a point-at-infinity detector that determines the position of a point at infinity in the image, based on the captured image; and
   a pedestrian detection region setting unit that sets a detection region for detection of the position of the pedestrian, according to the position of the point at infinity.

2. The far-infrared pedestrian detection device according to claim 1, **characterized in that** the point-at-infinity detector includes:

   a contour detector that detects, in the image, contour constituent points at each of which a difference in pixel value between adjacent pixels is equal to or more than a predetermined value, and directions in which contours extend at the contour constituent points;
   a specific contour component removal unit that removes a contour constituent point at which the contour extends in a horizontal or nearly horizontal direction, and a contour constituent point at which the contour extends in a vertical or nearly vertical direction, from the contour constituent points detected by the contour detector; and
   a straight line detector that detects two straight lines on which the contour extends in directions that are a predetermined value or more away from each other, based on the positions of the contour constituent points that are not removed by the specific contour component removal unit and on the directions in which the contours extend at the contour constituent points, and
   the point-at-infinity detector determines the position of the point at infinity, based on the detected two straight lines.

3. The far-infrared pedestrian detection device according to claim 2, **characterized in that** the specific contour component removal unit removes information corresponding to a horizontal or nearly horizontal straight line and a vertical or nearly vertical straight line passing through the contour constituent points, from Hough space created by performing a Hough transform on the contour constituent points detected by the contour detector, and the straight line detector detects the straight lines based on results obtained by removing the specific contour components.

4. The far-infrared pedestrian detection device according to claim 1, **characterized in that** a template matching unit, a marker superimposition unit, and an image display unit are mounted on a vehicle, the template matching unit performing comparison and matching with a predetermined template on the pedestrian detection region set by the pedestrian detection region setting unit thereby to detect an image portion corresponding to an image represented on the template, the marker superimposition unit presenting an output with a predetermined marker superimposed on the image portion detected by the template matching unit, the image display unit displaying predetermined information,
   the image obtained by image capture is an image obtained by capturing an image of a predetermined region in a direction of travel of the vehicle, and
   the template matching unit performs matching with a template to which an image of a pedestrian is applied as the image of the template.

5. The far-infrared pedestrian detection device according to claim 2, **characterized in that**
   a template matching unit, a marker superimposition unit, and an image display unit are mounted on a vehicle, the template matching unit performing comparison and matching with a predetermined template on the pedestrian detection region set by the pedestrian detection region setting unit thereby to detect an image portion corresponding to an image represented on the template, the marker superimposition unit presenting an output with a predetermined marker superimposed on the image portion detected by the template matching unit, the image display unit displaying predetermined information,
   the image obtained by image capture is an image obtained by capturing an image of a predetermined region in a direction of travel of the vehicle, and
   the template matching unit performs matching with a template to which an image of a pedestrian is applied as the image of the template.

6. The far-infrared pedestrian detection device according to claim 3, **characterized in that**
   a template matching unit, a marker superimposition unit, and an image display unit are mounted on a vehicle, the template matching unit that performs comparison and matching with a predetermined template on the pedestrian detection region set by the pedestrian detection region setting unit thereby to detect an image portion corresponding to an image represented on the template, the marker superimposition unit that presenting an output with a predetermined marker superimposed on the image portion detected by the template matching unit, the image display unit displaying predetermined information,

the image obtained by image capture is an image obtained by capturing an image of a predetermined region in a direction of travel of the vehicle, and

the template matching unit performs matching with a template to which an image of a pedestrian is applied as the image of the template.

# FIG.1

100 FAR-INFRARED PEDESTRIAN DETECTION DEVICE

20 PEDESTRIAN DETECTOR

10

FAR-INFRARED IMAGE CAPTURE UNIT

30
POINT-AT-INFINITY DETECTOR

40
PEDESTRIAN DETECTION REGION SETTING UNIT

TEMPLATE MATCHING UNIT

MARKER SUPERIMPOSITION UNIT

IMAGE DISPLAY UNIT

50          60          70

# FIG.2

30          20

10

31
PIXEL VALUE ADJUSTMENT UNIT

32
CONTOUR DETECTOR

33
HOUGH TRANSFORM UNIT

34
SPECIFIC CONTOUR COMPONENT REMOVAL UNIT

35
STRAIGHT LINE DETECTOR

36
STRAIGHT LINE INTERSECTION POINT CALCULATOR

40

51
CORRELATION VALUE CALCULATOR

53
PEDESTRIAN POSITION DETECTOR

60          70

TEMPLATE STORAGE UNIT

52          50

13

# FIG.3

INPUTTING
OF IMAGE — S1

↓

PIXEL VALUE
ADJUSTMENT — S2

↓

CONTOUR
ENHANCEMENT — S3

↓

BINARIZATION
PROCESS — S4

↓

HOUGH TRANSFORM
PROCESS — S5

↓

REMOVAL OF SPECIFIC
CONTOUR COMPONENTS — S6

↓

DETECTION OF TWO
STRAIGHT LINES — S7

↓

CALCULATION OF POINT OF
INTERSECTION OF STRAIGHT LINES — S8

↓

SETTING OF PEDESTRIAN
DETECTION REGION — S9

↓

CALCULATION OF — S10     TEMPLATE
CORRELATION VALUE ← MATCHING — S11

↓

DETECTION OF POSITION
OF PEDESTRIAN — S12

↓

OUTPUTTING OF PEDESTRIAN
POSITION DATA — S13

FIG.4

200

FIG.5

201

FIG.6

202

FIG.7

O(0, 0)

$\theta$

$\rho$

C(x0, y0)

L1

202

x

y

FIG.8

$\theta = -90°$          $\theta = 0°$          $\theta = 90°$

$\theta$

203

$\rho$

FIG.9

$\theta = -90°$          $\theta = 0°$          $\theta = 90°$

$\theta$

204

$\theta \leqq -90° + \omega$

$-\omega \leqq \theta \leqq \omega$

$90° - \omega \leqq \theta$

$\rho$

# FIG.10

# FIG.11

## FIG.12

## FIG.13

FIG.14

FIG.15

FIG.16

**EP 2 492 868 A1**

| | | |
|---|---|---|
| **INTERNATIONAL SEARCH REPORT** | International application No. | |
| | PCT/JP2010/067400 | |

**A. CLASSIFICATION OF SUBJECT MATTER**
*G06T7/00*(2006.01)i, *G06T1/00*(2006.01)i, *G08G1/16*(2006.01)i, *H04N7/18*
(2006.01)i

According to International Patent Classification (IPC) or to both national classification and IPC

**B. FIELDS SEARCHED**

Minimum documentation searched (classification system followed by classification symbols)
G06T7/00, G06T1/00, G08G1/16, H04N7/18

Documentation searched other than minimum documentation to the extent that such documents are included in the fields searched
Jitsuyo Shinan Koho          1922-1996   Jitsuyo Shinan Toroku Koho   1996-2010
Kokai Jitsuyo Shinan Koho    1971-2010   Toroku Jitsuyo Shinan Koho   1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2005-316607 A  (Toyota Motor Corp.),<br>10 November 2005 (10.11.2005),<br>paragraphs [0034] to [0037]; fig. 3<br>(Family: none) | 1,4<br>2,3,5,6 |
| Y<br>A | JP 2006-314061 A  (Nissan Motor Co., Ltd.),<br>16 November 2006 (16.11.2006),<br>paragraph [0012]<br>(Family: none) | 1,4<br>2,3,5,6 |
| Y<br>A | JP 2008-65463 A  (Toyota Motor Corp.),<br>21 March 2008 (21.03.2008),<br>paragraph [0020]<br>(Family: none) | 4<br>1-3,5,6 |

☐  Further documents are listed in the continuation of Box C.          ☐  See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>20 October, 2010 (20.10.10) | Date of mailing of the international search report<br>02 November, 2010 (02.11.10) |
|---|---|
| Name and mailing address of the ISA/<br>Japanese Patent Office | Authorized officer |
| Facsimile No. | Telephone No. |

Form PCT/ISA/210 (second sheet) (July 2009)

**EP 2 492 868 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003009140 A

- JP 2009244443 A